# EUROPEAN PATENT APPLICATION

(11) **EP 3 785 520 A1**
(43) Date of publication of application: **03.03.2021**
(21) Application number: 19793941.6
(22) Date of filing: 26.04.2019
(51) Int. Cl.: A01D 69/02

(54) **AUTONOMOUS GARDENING APPARATUS**

(30) Priority: 26.04.2018 CN 201810387518
(71) Applicant: Positec Power Tools (Suzhou) Co., Ltd, Suzhou, Jiangsu 215123 (CN)
(72) Inventor: TESTOLIN, Federico, Vicenza 36100 (IT); DALFRA, Davide, Vicenza 36100 (IT)
(74) Representative: Dentons UK and Middle East LLP
(86) International application number: PCT/CN2019/084531
(87) International publication number: WO 2019/206274

(57) **Abstract**

An autonomous gardening apparatus comprising: a housing; a drive motor provided within the housing and comprising a stator and a rotor, the stator comprising a stator core and a winding wound around the stator core; a moving assembly, driven by the rotor of the drive motor, to drive the autonomous gardening apparatus to walk; a control unit, controlling operations of the drive motor, the operations comprising at least controlling the rotor to operate at a target rotation speed; and an energy storage unit providing electricity to the drive motor and/or the control unit, wherein when an actual rotation speed of the rotor is greater than the target rotation speed, the rotor rotates and cuts the winding to generate induced electric energy, and the induced electric energy is transferred to the energy storage unit.

## Description

### Technical Field

The disclosure relates to the field of autonomous gardening apparatuses, and specifically, to an autonomous gardening apparatus with an energy recovery function.

### Related Art

In recent years, with the substantial increase in green areas and family courtyard gardens, the market of gardening tools for greening maintenance is gradually increasing. Especially, there are large greening areas in developed regions such as Europe and the United States. Both public areas and family greening require a lot of gardening tools for greening maintenance.

At present, there are many types of commercially available gardening tools. According to operation modes, the gardening tools may be classified into an automatic mobile type and a non-automatic mobile type. The non-automatic mobile type is mainly classified into a hand push type and a riding type. Drive modes of the gardening tools mainly include engine drive, electric drive, lithium battery drive, solar drive, and the like. Automatic mobile tools are products of applying robotic technology to gardening tools, can work autonomously, and are mostly driven by lithium batteries.

### SUMMARY

The disclosure provides an autonomous gardening apparatus, the autonomous gardening apparatus, comprising: a housing, a drive motor, disposed in the housing and comprising a stator and a rotor, the stator comprising a stator core and a winding wound around the stator core; a moving assembly, driven by the rotor of the drive motor, to drive the autonomous gardening apparatus to walk; a control unit, controlling operations of the drive motor, at least comprising controlling the rotor to operate at a target rotation speed; and an energy storage unit, supplying electric energy to the drive motor and/or the control unit, wherein when an actual rotation speed of the rotor is greater than the target rotation speed, the rotor rotates and cuts the winding to generate induced electric energy, and the induced electric energy is transferred to the energy storage unit.

In some embodiments of the disclosure, when an actual rotation speed of a rotor is greater than a target rotation speed, the rotor rotates and cuts a winding to generate induced electric energy, and the induced electric energy is transferred to an energy storage unit. This process converts excess kinetic energy of a drive motor into electric energy to be stored in the energy storage unit. In a process of gradually converting kinetic energy into electric energy, the speed of the drive motor gradually decreases to the target speed, to achieve speed stabilization and reduce problems such as that the autonomous gardening apparatus overturns, collides with an obstacle or rushes out a boundary due to excessively high speed under an external force, thereby improving the reliability of the tool. In an example of a typical scenario, when moving down a steep slope, the autonomous gardening apparatus has an excessively large force in the downward direction due to its own gravity. In another example, when the autonomous gardening apparatus is suddenly subject to the impact of an artificial external force in the moving direction.

Optionally, when driven by an external force in a moving direction, the moving assembly drives the rotor to rotate, and when the external force applied to the moving assembly in the moving direction is greater than a preset external force, the moving assembly drives the rotor to rotate at a speed greater than the target rotation speed.

Optionally, when the autonomous gardening apparatus moves down along a slope with an angle greater than a preset angle, the external force applied to the moving assembly in the moving direction is greater than the preset external force.

Optionally, the moving assembly comprises a wheel set and/or a moving member in contact with the ground to support and move the autonomous gardening apparatus.

Optionally, the rotor is located on an inner side of the stator, and the rotor assembly is connected to the wheel set and/or the moving member.

Optionally, when the control unit controls the drive motor to brake, the rotor continues to rotate under an inertial force, so that the actual rotation speed of the rotor is greater than the target rotation speed.

Optionally, the control unit comprises a switch circuit, the switch circuit comprises a first switch module and a second switch module connected in series, the switch circuit converts the electric energy supplied by the energy storage unit to drive the drive motor, each of the first switch module and the second switch module comprises a parasitic diode, and when a voltage of the induced electric energy generated by the drive motor is greater than a voltage of the energy storage unit, the parasitic diode is conducting, and the electric energy generated by the drive motor is transferred to the energy storage unit through the parasitic diode.

Optionally, the switch circuit comprises a drive module configured to drive the first switch module and the second switch module.

Optionally, the drive module further comprises a bootstrap circuit, and an output terminal of the bootstrap circuit is electrically connected to a trigger terminal of the first switch module and a trigger terminal of the second switch module, to drive the first switch module and the second switch module.

Optionally, the energy storage unit is electrically connected to a voltage regulator.

Optionally, the voltage regulator comprises a capacitor, one end of the capacitor is electrically connected to a positive terminal of the energy storage unit, the other end is electrically grounded, and the voltage regulator performs voltage regulation and filtering when the electric energy generated by the drive motor is transferred to the energy storage unit.

Optionally, further comprising a sensor component, wherein the sensor component is electrically connected to the control unit, the sensor component detects environmental information of the autonomous gardening apparatus and feeds back detected information to the control unit, and the control unit controls the operations of the drive motor based on the detected information.

The disclosure further provides an autonomous gardening apparatus with a small volume and a light weight that can maximize the use of electric energy stored in a battery pack. Meanwhile, in some occasions, because a wheel set or a moving member of the device is driven by an external force to drive a rotor assembly to rotate a motor to generate electric energy to be stored in the battery pack.

To achieve the foregoing objective, the disclosure uses the following solution: an autonomous gardening apparatus is provided, including: a shell body, a drive motor and a control unit that are disposed in the shell body, and a power supply connection part that is disposed on the surface of or inside the shell body and is configured to be connected to an energy storage unit, the energy storage unit being electrically connected to the power supply connection part, to supply power to the drive motor and the control unit, the drive motor being connected to the moving assembly, and driving the autonomous gardening apparatus based on an instruction of the control unit to move, the control unit being electrically connected to the power supply connection part and the drive motor, where when the moving assembly is driven by an external force to drive a rotor assembly of the drive motor to rotate and cut a winding to generate an induced electric potential and the induced electric potential is greater than a voltage of the energy storage unit, the electric energy generated by the drive motor is stored in the energy storage unit.

Optionally, the drive motor includes a stator assembly and a rotor assembly, the stator assembly includes a winding wound around a stator core, and the rotor assembly is connected to a wheel set and/or a moving member.

Optionally, the rotor assembly is located on an inner side of the stator assembly, and the rotor assembly is connected to the wheel set and/or the moving member.

Optionally, when the autonomous gardening apparatus moves down a slope, if the induced electric potential generated by the drive motor is greater than the voltage of the energy storage unit, the electric energy generated by the drive motor is stored in the energy storage unit, to restrain the moving speed of the autonomous gardening apparatus.

Optionally, the control unit includes a switch circuit, where the switch circuit includes a first switch module and a second switch module that are electrically connected in series, and is configured to convert the electric energy supplied by the energy storage unit to drive the drive motor, each of the first switch module and the second switch module includes a parasitic diode, and when an induced electric potential generated by the drive motor is greater than a voltage of the energy storage unit, the parasitic diode is conducting, and the electric energy generated by the drive motor is stored in the energy storage unit.

Optionally, the switch circuit comprises a drive module configured to drive the first switch module and the second switch module.

Optionally, the drive module further comprises a bootstrap circuit, and an output terminal of the bootstrap circuit is electrically connected to a trigger terminal of the first switch module and a trigger terminal of the second switch module, to drive the first switch module and the second switch module.

Optionally, the energy storage unit is electrically connected to a voltage regulator.

Optionally, the voltage regulator comprises a capacitor, one end of the capacitor is electrically connected to a positive terminal of the energy storage unit, the other end is electrically grounded, and the voltage regulator performs voltage regulation and filtering when the electric energy generated by the drive motor is transferred to the energy storage unit.

Optionally, the autonomous gardening apparatus further includes a sensor, where the sensor is electrically connected to the control unit, the sensor detects location information of the autonomous gardening apparatus and feeds back detected information to the control unit, and the control unit adjusts actions of the autonomous gardening apparatus based on the detected information.

Optionally, the autonomous gardening apparatus is provided with an image recognition device, where the image recognition device is electrically connected to the control unit, the image recognition device detects environmental information of the autonomous gardening apparatus and feeds back detected environmental information to the control unit, and the control unit adjusts actions of the autonomous gardening apparatus based on the environmental information.

Optionally, the location information includes at least one of the location information, moving speed information, and posture information of the autonomous gardening apparatus.

Optionally, the energy storage unit includes at least a battery pack, and the voltage of the battery pack is between 16 V and 60 V.

An implementation of the disclosure further provides a control method of an autonomous gardening apparatus, the autonomous gardening apparatus including: a shell body, a drive motor and a control unit that are disposed in the shell body, and a power supply connection part that is disposed on the surface of or inside the shell body and is configured to be connected to an energy storage unit, the energy storage unit being electrically connected to the power supply connection part, to supply power to the drive motor and the control unit, the drive motor being connected to the moving assembly, and driving the autonomous gardening apparatus based on an instruction of the control unit to move, the control unit being electrically connected to the power supply connection part and the drive motor, the control method including the following steps: detecting movement information of the autonomous gardening apparatus, and reducing output power of the drive motor when the movement information exceeds a set threshold. In this way, the autonomous gardening apparatus is at a preset speed, and the moving speed of the autonomous gardening apparatus is restrained.

Optionally, the control method includes the following step: if the output power of the drive motor is zero, detecting the movement information of the autonomous gardening apparatus, and storing the electric energy generated by the drive motor in the energy storage unit.

Optionally, the control method includes the following steps: if the output power of the drive motor is zero, detecting the movement information of the autonomous gardening apparatus, and when the induced electric potential generated by the drive motor is greater than the voltage of the energy storage unit, storing the electric energy generated by the motor in the energy storage unit.

Compared with the prior art, the disclosure has the following beneficial effects: the autonomous gardening apparatus provided in this application can maximize the use of electric energy stored in an energy storage unit (for example, a battery pack), and when an external force is applied to the autonomous gardening apparatus, the driving force outputted by the drive motor is adjusted intelligently, so that the autonomous gardening apparatus is at a preset speed, and the moving speed of the autonomous gardening apparatus is restrained. The magnitude of the reduced driving force of the drive motor is approximately equal to the magnitude of an additional external force applied to the autonomous gardening apparatus. If the driving force outputted by the drive motor is not required to move the autonomous gardening apparatus, the electric energy generated by the motor is stored in the energy storage unit through an energy supply circuit.

In some occasions (for example, when moving downhill), the speed at which the autonomous gardening apparatus accelerates downward is restrained, and problems such as that the autonomous gardening apparatus overturns, collides with an obstacle or rushes out a boundary due to rapid movement when the autonomous gardening apparatus is moving downhill to cause damage to a tool are reduced, thereby improving the reliability of the tool.

### BRIEF DESCRIPTION OF THE DRAWINGS

FIG. 1 is a schematic structural diagram of an autonomous gardening apparatus according to an embodiment of the disclosure;
FIG. 2 is a schematic diagram of the functional structure of a control unit of an autonomous gardening apparatus according to the embodiment shown in FIG. 1;
FIG. 3 is a schematic diagram of the functional structure of another control unit of an autonomous gardening apparatus according to the embodiment shown in FIG. 1;
FIG. 4 is a schematic diagram of the overall structure of an autonomous gardening apparatus according to another embodiment of the disclosure;
FIG. 5 is a schematic diagram of the internal structure of an autonomous gardening apparatus according to the embodiment shown in FIG. 4; and
FIG. 6 is a schematic diagram of a force applied to an automatic walking device when the automatic walking device descends a ramp.

### DETAILED DESCRIPTION

To make the above objects, features and advantages of the disclosure more clearly understood, specific implementations of the disclosure will be described in detail below with reference to the accompanying drawings. In the following description, many specific details are described for thorough understanding of the disclosure. However, the disclosure can be implemented in many other ways different from those described herein, and a person skilled in the art can make similar improvements without departing from the concept of the disclosure. Therefore, the disclosure is not limited by the specific embodiments disclosed below.

It should be noted that when an element is considered to be "connected" to another element, the element may be directly connected to the another element, or a central element may exist at the same time, or the element may be electrically connected to the another element.

Unless otherwise defined, meanings of all technical and scientific terms used in this specification are the same as that usually understood by a person skilled in the art to which the disclosure belongs. In this specification, terms used in the specification of the disclosure are merely intended to describe objectives of the specific embodiments, but are not intended to limit the disclosure. A term "and/or" used in this specification includes any or all combinations of one or more related listed items. The autonomous gardening apparatus provided In some embodiments of the disclosure may be a lawnmower. A lawnmower is used as an example for description below.

An implementation of the disclosure provides an autonomous gardening apparatus, including: a shell body, a drive motor and a control unit that are disposed in the shell body, and a power supply connection part that is disposed on the surface of or inside the shell body and is configured to be connected to an energy storage unit, the energy storage unit being electrically connected to the power supply connection part, to supply power to the drive motor and the control unit, the drive motor being connected to the moving assembly, and driving the autonomous gardening apparatus based on an instruction of the control unit to move, the control unit being electrically connected to the power supply connection part and the drive motor, where
when the autonomous gardening apparatus is driven by an external force to move, the control unit reduces output power of the drive motor. In this way, the autonomous gardening apparatus is at a preset speed, and the moving speed of the autonomous gardening apparatus is restrained.

In the foregoing implementation, the drive motor includes a drive motor for driving the autonomous gardening apparatus to move, and may further include a motor (for example, a mowing motor) for driving the autonomous gardening apparatus to work. The autonomous gardening apparatus includes a moving assembly such as a wheel set or a moving member (a track).

In the foregoing implementation, the drive motor uses a direct current motor. The direct current motor includes a stator assembly and a rotor assembly. The stator assembly is a stationary part of a direct current brushless motor, and mainly includes a magnetically conductive stator core, a conductive armature winding, and some parts, insulating materials, lead-out parts and the like that are used to fix the core and the winding. The rotor assembly includes a permanent magnet. After the motor is energized, the armature winding (excitation coil) generates a magnetic field in the motor through a high-frequency signal, and interacts with the permanent magnet on the rotor assembly to generate an electromagnetic torque that drives the rotor assembly to rotate. In an example embodiment, the rotor assembly is located on an inner side of the stator assembly (inner rotor direct current motor).

In the foregoing implementation, when the autonomous gardening apparatus is pushed by an external force or moves downhill during operation, the direction of the external force is the same as a moving direction of the autonomous gardening apparatus because the autonomous gardening apparatus is subject to the external force. If the autonomous gardening apparatus is controlled in the manner before the external force is applied (maintaining a driving force), the moving speed of the autonomous gardening apparatus increases. By reducing the output power of the drive motor, for example, reducing the current outputted by the energy storage unit, the strength of the magnetic field generated by the winding of the stator assembly decreases, and the electromagnetic torque that is generated from the interaction with the permanent magnet on the rotor assembly and drives the rotor assembly to rotate decreases (the driving force of the drive motor decreases). In this case, a rotation speed of the rotor assembly decreases. The moving speed of the autonomous gardening apparatus driven by the driving force of the drive motor gradually decreases. By such a design, the driving force of the drive motor is adjusted to restrain the moving speed of the autonomous gardening apparatus. In this way, the autonomous gardening apparatus can maintain a preset speed (a preset speed range). In this case, because a driving current of the drive motor decreases, the strength of the magnetic field generated by the winding of the stator assembly decreases, and the electromagnetic torque that is generated from the interaction with the permanent magnet on the rotor assembly and drives the rotor assembly to rotate decreases, so that the rotation speed of the rotor assembly decreases. Problems such as that the autonomous gardening apparatus overturns or collides with an obstacle due to rapid movement under an external force (for example, moving downhill or being pushed by the external force) to cause damage to a tool are reduced, thereby improving the reliability of the tool. Alternatively, when the autonomous gardening apparatus rushes out a boundary due to rapid movement when moving downhill and fail to finish a predetermined task, problems such as that the autonomous gardening apparatus moves blindly (for example, moves into a puddle) because the autonomous gardening apparatus is no longer bound by the boundary and a path cannot be planned after the autonomous gardening apparatus rushes out the boundary to cause damage to a tool are reduced. In this implementation, the magnitude of the reduced driving force of the drive motor is approximately equal to the magnitude of an additional external force applied to the autonomous gardening apparatus. In an example embodiment, the direction of the external force is at an angle with the moving direction of the autonomous gardening apparatus. However, by decomposing the external force, the direction of a component of the force in one direction is the same as the moving direction of the autonomous gardening apparatus.

In the foregoing implementation, in some occasions, the autonomous gardening apparatus does not need a drive motor to provide the driving force and can move merely by an external force. In this case, the rolling of the rolling wheel set of the device drives the rotor assembly of the motor to rotate and generate an induced electric potential on the motor (that is, the rotation of the rotor assembly of the motor generates an induced electromotive force on the motor). If the induced electric potential is greater than the voltage of the energy storage unit, the electric energy generated by the motor is stored in the energy storage unit. In this way, the overall efficiency of the tool is improved. An implementation of transferring the electric energy generated by the motor to the energy storage unit of this application will be described in detail with reference to the accompanying drawings.

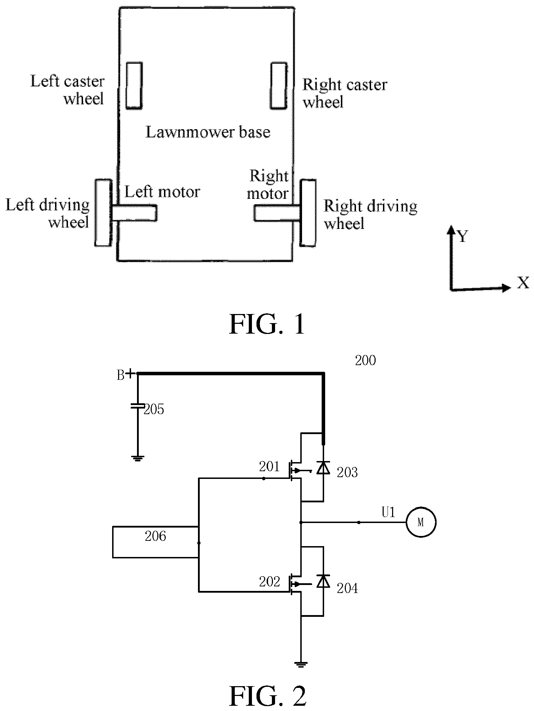

FIG. 1 is a schematic structural diagram of an autonomous gardening apparatus according to an embodiment of the disclosure. In this embodiment, in the Y-axis direction, the rear end (lower end) of the bottom of the device is equipped with two drive motors (that is, a left motor and a right motor) that are respectively connected to corresponding rolling wheel sets. The front end (upper end) of the bottom of the device is equipped with two caster wheels (that is, a left caster wheel and a right caster wheel). This structure can implement the movement of the tool in any posture by adjusting the rotation status of the two drive motors (that is, the left motor and the right motor). For example, when the left and right wheels rotate at the same speed in the same direction, the tool can move forward or backward. When the left and right motors rotate at the same speed in opposite directions, the tool spins. When the left and right motors rotate at different speeds, the tool operates along a particular arc.

In the foregoing implementation, the energy storage unit of the autonomous gardening apparatus is equipped with at least one battery pack. The battery pack is equipped inside the shell body (the battery pack is connected to the power supply connection part to supply power to the drive motor and the control unit). A driving part of the autonomous gardening apparatus consists of the drive motors (the left motor and the right motor). In addition to the drive motors, the autonomous gardening apparatus is further equipped with a motor (not shown) used to control work (for example, mowing). The motor is used to drive a cutter head to operate. A blade is mounted on the cutter head to perform work such as mowing when the motor is operating at a high speed. The drive motor includes a stator assembly and a rotor assembly that is located on an inner side of the stator assembly. The rotor assembly is connected to the rolling wheel set (by a speed reduction structure).

Assuming that a target rotation speed of the motor is V1, the control unit controls the motor with a duty cycle PWM1. In this case, if the autonomous gardening apparatus is subject to an external force F1 (the same as the moving direction of the autonomous gardening apparatus) and is still controlled by the duty cycle PWM1, the speed of the motor increases, and the moving speed of the autonomous gardening apparatus gradually increases correspondingly. To maintain the target rotation speed V1 of the motor, the device may be controlled with a reduced duty cycle PWM2, and as the external force increases, the duty cycle is reduced accordingly, so that the motor can maintain the target rotation speed V1. If the external force continues to increase and the duty cycle becomes zero, the motor can still rotate at V1. In this case, if the external force continues to increase, merely the external force acts and the duty cycle is zero, and the motor rotates at V2 greater than V1. In this case, under the external force, the moving assembly drives the rotor to rotate. The permanent magnet on the rotor assembly rotates and cuts the winding of the stator assembly to generate the induced electric potential on the motor (that is, the rotation of the rotor assembly of the motor generates the induced electromotive force on the motor), and the electric energy generated by the motor is stored in the energy storage unit.

In an example embodiment, the external force may be gravity, for example, when the autonomous gardening apparatus moves downwards along a slope. In an example embodiment, the electric energy generated by the motor is stored in the energy storage unit through an energy supply circuit. The energy supply circuit may be arranged in the control unit (a control board of the control unit) through wiring or may be arranged in the form of a wire. When the autonomous gardening apparatus moves normally and works (for example, performs mowing), the energy storage unit supplies energy to the drive motor through the energy supply circuit.

In an example embodiment, the drive motor includes a stator assembly and a rotor assembly that is located on an inner side of the stator assembly. The rotor assembly is connected to the moving member (by a speed reduction structure). When the external force pushes the device to move rapidly or the device moves downhill, the movement of the moving member (for example, a track) drives the rotor assembly to rotate and generate the induced electric potential on the motor (that is, the rotation of the rotor assembly of the motor generates an induced electromotive force on the motor). If the induced electric potential is greater than the voltage of the energy storage unit, the electric energy generated by the motor is stored in the energy storage unit.

In an example embodiment, the battery pack is mounted in a battery pack mounting slot of the shell body in a pluggable manner. A power supply connection part is arranged in the mounting slot. The battery pack is connected to the power supply connection part to supply power to the drive motor and the control unit.

In an example embodiment, a front-wheel drive manner or a four-wheel drive manner is used. In an example embodiment, the autonomous gardening apparatus uses a rear-wheel drive manner, and one caster wheel is arranged at the center of the front of the bottom of the autonomous gardening apparatus.

In an example embodiment, the tool further includes a Hall sensor used to detect various obstacles or an unforeseen emergency during the operation of the tool, for example, external lifting or a collision signal that may cause lifting, collision, overturning or the like. When colliding with a Hall rod or lifting the Hall rod to cause deformation or displacement of the Hall rod under the external force, the Hall sensor generates a Hall signal and sends the signal to an I/O port of a processor of the control unit, and the processor then performs processing.

In an example embodiment, the tool further includes a tilt sensor to avoid overturning when the tool is operating. Specifically, the tool includes a hardware switch-type tilt sensor and a three-axis acceleration sensor. When an angle is greater than a fixed value, the hardware switch-type tilt sensor outputs a high level, and the I/O port of the processor of the control unit detects whether the lawnmower is overturned. The three-axis acceleration sensor outputs an induced electric potential simulation quantity in the three-axis direction. According to the generated induced electric potential simulation quantity, a pitch angle and a roll angle of the lawnmower can be calculated, thereby implementing system protection.

In an example embodiment, the body of the tool is further arranged with an induced electric potential group generated by a display (for example, a liquid crystal display (LCD)), to improve better human-computer interaction and user participation.

In an example embodiment, to implement that the tool has an intelligent path planning function, the tool uses (D) GPS and an electronic compass to implement positioning and navigation.

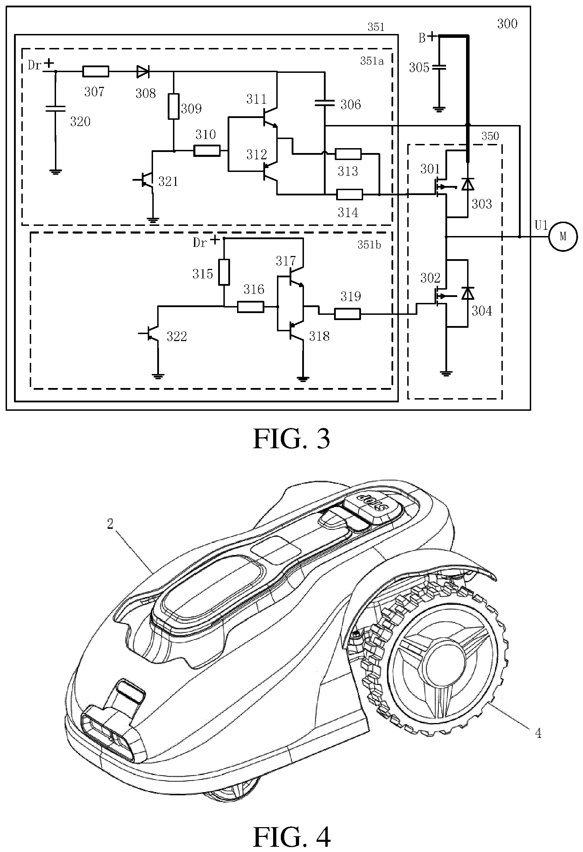

Next, a single-phase motor is used as an example to describe in detail a driving circuit of a drive motor of an autonomous gardening apparatus according to an implementation of this application with reference to FIG. 2 and FIG. 3. In this implementation, electric energy generated by the motor is recovered to the energy storage unit (for example, a battery pack).

FIG. 2 is a schematic diagram of the functional structure of a control unit of an autonomous gardening apparatus. An autonomous gardening apparatus 200 includes a control unit. The control unit includes a microcontroller 206 used to control a first switch module 201 and a second switch module 202 in a switch circuit. A drain terminal of the first switch module 201 is electrically connected to a positive terminal of the energy storage unit. A source terminal of the first switch module 201 is electrically connected to a drain terminal of the second switch module 202. A source terminal of the second switch module 202 is electrically grounded. An electrical connection terminal between the source terminal of the first switch module 201 and the drain terminal of the second switch module 202 forms a first output terminal U1 of a motor M. The first output terminal U1 is electrically connected to a drive terminal (not shown) of the drive motor. The drain terminal and the source terminal of the first switch module 201 are connected to a diode 203. A positive terminal of the diode 203 is electrically connected to the source terminal of the first switch module 201. A cathode terminal of the diode 203 is electrically connected to the drain terminal of the first switch module 201. The drain terminal and the source terminal of the second switch module 202 are connected to a diode 204. A positive terminal of the diode 204 is electrically connected to the source terminal of the second switch module 202. A cathode terminal of the diode 204 is electrically connected to the drain terminal of the second switch module 202. One end of the energy supply circuit is electrically connected to a positive terminal of the energy storage unit, and the other end is electrically connected to the drain terminal of the first switch module. Under the external force, the rolling of the rolling wheel set drives the rotor assembly to rotate and generate the induced electric potential on the motor that is greater than the voltage of the energy storage unit, the diode 203 is conducting, and the electric energy generated by the drive motor is stored in the energy storage unit. In an application scenario, for example, when the device is moving downhill, due to the effect of gravity, when the device moves downwards, the rolling wheel set or the moving member drives the rotor assembly to rotate and generate the induced electric potential on the motor that is greater than the voltage of the energy storage unit, the diode 203 is conducting, and the electric energy generated by the motor is stored in the energy storage unit. In this implementation, the first switch module 201 and the second switch module 202 are electrically connected in series.

In the implementation shown in FIG. 2, the microcontroller 206 drives the first switch module and the second switch module in the form of PWM, to implement the control of the motor, thereby controlling the movement or operation of the motor. The energy storage unit includes a battery pack (arranged with a number of cells electrically connected according to a particular rule). In this implementation, a voltage regulator such as a capacitor 205 is further included. One end of the capacitor 205 is electrically connected to the positive terminal of the energy storage unit, and the other end is electrically grounded, to perform filtering and store electric power generated by the drive motor. When working normally, the device is provided with motor driving electric energy by the energy storage unit.

In an example embodiment, the first switch module and the second switch module are separately connected in a manner of connecting two switch modules in parallel, and the circuit of the two modules is equivalent to one switch module, for example, a first switch module, thereby improving the reliability of the switch circuit. In this implementation, an equivalent diagram of an electronic component is shown. During actual application, there may be one or more electronic components that are electrically connected according to a particular rule.

In an example embodiment as shown in FIG. 3, the control unit controls the device through the drive module. The control unit further includes a drive module (for example, a bootstrap circuit) to drive the switch circuit. The autonomous gardening apparatus 300 includes a control unit that includes a switch circuit 350 and a bootstrap circuit 351.

The switch circuit 350 includes a first switch module 301 and a second switch module 302. A drain terminal of the first switch module 301 is electrically connected to a positive terminal B+ of the energy storage unit. A source terminal of the first switch module 301 is electrically connected to a drain terminal of the second switch module 302. A source terminal of the second switch module 302 is electrically grounded. An electrical connection terminal between the source terminal of the first switch module 301 and the drain terminal of the second switch module 302 forms a first output terminal U1. The first output terminal U1 is electrically connected to a drive terminal (not shown) of the drive motor M. The drain terminal and the source terminal of the first switch module 301 are connected to a diode 303. A positive terminal (P) of the diode 303 is electrically connected to the source terminal of the first switch module 301. A cathode terminal (N) of the diode 303 is electrically connected to the drain terminal of the first switch module 301. The drain terminal and the source terminal of the second switch module 302 are connected to a diode 304. A positive terminal of the diode 304 is electrically connected to the source terminal of the second switch module 302. A cathode terminal of the diode 304 is electrically connected to the drain terminal of the second switch module 302. One end of the energy supply circuit is electrically connected to a positive terminal (B+) of the energy storage unit, and the other end is electrically connected to the drain terminal of the first switch module 301. The electric energy generated by the drive motor (for example, when the autonomous gardening apparatus is moving downhill, due to the effect of gravity, the induced electric potential generated by the rotation of the rotor assembly of the motor) is stored in the energy storage unit through the energy supply circuit. In this implementation, the first switch module 301 and the second switch module 302 are electrically connected in series.

The bootstrap circuit 351 includes a circuit 351a for driving the first switch module 301 and a circuit 351b for driving the second switch module 302.

The circuit 351a includes a transistor 321. A collector terminal of the transistor 321 is electrically connected to one end of a resistor 309 and one end of a resistor 310. An emitter terminal of the transistor is electrically grounded. The other end of the resistor 310 is electrically connected to bases of a transistor 311 and a transistor 312 respectively. An emitter terminal of the transistor 311 is electrically connected to the emitter terminal of transistor 312 and one end of the resistor 313. A collector terminal of transistor 311 is electrically connected to the other end of the resistor 309 and a negative (N) terminal of the diode 308. A collector terminal of the transistor 312 is electrically connected to one end of the resistor 314. After being connected to the other end of the resistor 314, the resistor 313 is electrically connected to a gate terminal of the first switch module 301. One end of the resistor 314 is electrically connected to one end of the capacitor 306, and the other end of the capacitor 306 is electrically connected to the collector terminal of the transistor 311. A positive (P) terminal of the diode 308 is electrically connected to the resistor 307 and electrically connected to a driving terminal Dr+, and the driving terminal Dr+ is connected to the capacitor 320. The first output terminal U1 is electrically connected to the junction of the resistor 314 and the capacitor 306.

The circuit 351b includes a transistor 322. A collector terminal of the transistor 322 is electrically connected to one end of a resistor 315 and one end of a resistor 316. An emitter terminal of the transistor is electrically grounded. The other end of the resistor 316 is electrically connected to bases of a transistor 317 and a transistor 318 respectively. An emitter terminal of the transistor 317 is electrically to an emitter terminal of the transistor 318 and one end of the resistor 319. A collector terminal of the transistor 317 is electrically connected to the driving terminal Dr+. A collector terminal of the transistor 318 is electrically grounded. The other end of the resistor 319 is electrically connected to a gate terminal of the second switch module 302. The other end of the capacitor 315 is electrically connected to the driving terminal Dr+.

In this implementation, the autonomous gardening apparatus 300 includes a control unit that includes a switch circuit 350, a bootstrap circuit 351, and a microcontroller (not shown). A control signal sent by the microcontroller is sent to trigger terminals (base terminals) of the transistor 321 and the transistor 322 and is then sent to the bootstrap circuit 351 to drive the switch circuit 350 (at this time, the voltage at the gate terminal of the first switch module 301 is greater than the voltage at the source terminal of the first switch module, and the voltage at the gate terminal of the second switch module 302 is greater than the voltage at the source terminal of the second switch module), and the output terminal U1 of the switch circuit 350 is electrically connected to a corresponding driving terminal of the drive motor. In this implementation, the transistor 321 and the transistor 322 may be bipolar transistors or MOS switches. In this implementation, the first switch module and the second switch module are N-type MOS. In another implementation, the first switch module and the second switch module may be alternatively N-type MOS or IGBT modules. A controller (not shown) drives the bootstrap circuit in the form of PWM to further drive the switch circuit. The voltage of the driving terminal Dr+ is the same as the voltage of the positive terminal of the energy storage unit or may be less than the voltage (for example, 3 V, 5 V or 12 V) of the positive terminal of the energy storage unit. In an example embodiment, the wire is arranged on the control board with a conductive layer (for example, copper foil). With this design, when the machine is moving downhill or is pushed by an external force to move, the power (back electromotive force) generated by the drive motor is transmitted to the energy storage unit through an energy recovery wire. At this time, the voltage of the driving terminal U1 of the drive motor M is greater than the voltage of the drain terminal of the first switch module, and the electric energy generated by the drive motor flows through the diode 303 and the energy supply circuit to the energy storage unit. The energy storage unit includes a battery pack (arranged with a number of cells electrically connected according to a particular rule). In this implementation, the capacitor 305 is further included. One end of the capacitor 305 is electrically connected to the positive terminal of the energy storage unit, and the other end is electrically grounded, to perform filtering and store electric power generated by the drive motor. With this design, when the autonomous gardening apparatus moves downhill, the electric energy generated by the rotor assembly rotating the drive motor is transmitted to the energy storage unit, thereby restraining the moving speed of the autonomous gardening apparatus when moving downhill and reducing a security risk caused by rapid movement.

The implementation of FIG. 2 and FIG. 3 merely shows a schematic diagram of the drive motor being a single-phase motor. If a three-phase motor is used, the foregoing implementation is equivalent to the driving of one phase of the three-phase motor (two switch modules are used). The drive topology of the other two phases is the same. Details are not described herein again.

In an example embodiment, if the drive motor uses a single-phase brushless motor, the topology shown in FIG. 2 or FIG. 3 is used.

An implementation of the disclosure further provides a control method of an autonomous gardening apparatus. The autonomous gardening apparatus includes: a shell body, a drive motor and a control unit that are disposed in the shell body, and a power supply connection part that is disposed on the surface of or inside the shell body and is configured to be connected to an energy storage unit, the energy storage unit being electrically connected to the power supply connection part, to supply power to the drive motor and the control unit, the drive motor being connected to the moving assembly, and driving the autonomous gardening apparatus based on an instruction of the control unit to move, the control unit being electrically connected to the power supply connection part and the drive motor.

The control method includes the following steps:
detecting movement information of the autonomous gardening apparatus, and reducing output power of the drive motor when the movement information exceeds a set threshold. In this way, the autonomous gardening apparatus is at a preset speed, and the moving speed of the autonomous gardening apparatus is restrained. In this implementation, the autonomous gardening apparatus relies on the driving force provided by the drive motor to move during normal operation. When the autonomous gardening apparatus is pushed by an external force or moves downhill and is still controlled in the manner before the external force is applied (maintaining a driving torque), the moving speed of the autonomous gardening apparatus increases. To enable the autonomous gardening apparatus to maintain a preset speed, the output power of the drive motor is reduced (the output current of the energy storage unit is reduced and the output of the energy storage unit is saved), and the driving force of the drive motor is adjusted.

In an example embodiment, the control method includes the following steps:
if the output power of the drive motor is zero, detecting the movement information of the autonomous gardening apparatus, and storing the electric energy generated by the drive motor in the energy storage unit.

In an example embodiment, the control method includes the following steps:
if the output power of the drive motor is zero, detecting the movement information of the autonomous gardening apparatus, and when the induced electric potential generated by the drive motor is greater than the voltage of the energy storage unit, storing the electric energy generated by the motor in the energy storage unit.

If the output power of the drive motor is zero, that is, the drive circuit does not provide electric energy to the drive motor. Preferably, if the switch circuit is not driven, it is considered that the drive circuit does not provide electric energy to the drive motor. This is not limited In some embodiments of the disclosure, provided it can be determined through detection that the energy storage unit does not provide driving electric energy to the drive motor.

The energy storage unit may be a battery pack or a supper capacitor. The movement information of the autonomous gardening apparatus, that is, the moving speed information, is obtained by a speed sensor.

It should be noted that In an example embodiment, an autonomous gardening apparatus may include one or more technical features of a "motor", a "control unit", and a "sensor". Content related to the "motor" may be selected from one or a combination of the related technical features included in the implementations, content related to the "control unit" may be selected from one or a combination of the related technical features included in the implementations, and content related to the "sensor" may be selected from one or a combination of the related technical features included in the implementations.

In the design of the autonomous gardening apparatus, the autonomous gardening apparatus is provided with at least one battery pack. The battery pack may be disposed in the autonomous gardening apparatus In an example embodiment. For example, one battery pack is used. The battery pack is disposed as close as possible to the center of gravity of the autonomous gardening apparatus, to improve the stability during working. When two battery packs are used (the two battery packs may be electrically connected in series or electrically connected in parallel), the battery packs are disposed as close as possible to a central region of the autonomous gardening apparatus (from the perspective of projecting the tool to the ground from the top) to improve the stability during working.

In the design of the autonomous gardening apparatus, the autonomous gardening apparatus is provided with at least one battery pack. The battery pack may be disposed in a mobile gardening device in a pluggable manner. For example, one battery pack is used. The battery pack is disposed as close as possible to the center of gravity of the autonomous gardening apparatus, to improve the stability during working. When two battery packs are used (the two battery packs may be electrically connected in series or electrically connected in parallel), the battery packs are disposed as close as possible to a central region of the autonomous gardening apparatus (from the perspective of projecting the tool to the ground from the top) to improve the stability during working.

In the design of the motor, a three-phase motor (for example, a three-phase brushless motor) is used. The three-phase motor is used to drive the autonomous gardening apparatus to move or drive the autonomous gardening apparatus to work (for example, mowing), and has the characteristics of low noise and high efficiency. The control of the three-phase brushless direct current motor uses three-phase PWM wave control, and there is a phase difference between the PWM waves on the phases, so that merely two phases are powered on at each moment, thereby controlling the rotation of the drive motor.

In the design of the motor, the motor includes a stator assembly and a rotor assembly that is located on an inner side of the stator assembly. The rotor assembly is connected to a wheel set and/or a moving member. When the device is working normally, the rotor assembly rotates to drive the wheel set and/or the moving member to implement the movement of the device. The wheel set and/or the moving member is driven by an external force to drive the rotor assembly to rotate and generate an induced electric potential on the motor, and when the induced electric potential is greater than the voltage of the energy storage unit, the electric energy generated by the motor is stored in the energy storage unit.

In the design of the motor, an output stage of the motor that drives the tool to move may be equipped with a reduction gearbox.

In the design of the control unit, the control unit is included in the body of the autonomous gardening apparatus, and includes a microcontroller, a detection module, and a control module. The detection module can detect the moving speed of the autonomous gardening apparatus and feeds back a detection signal to the microcontroller. The microcontroller modulates the control circuit based on the feedback signal, and then adjusts the moving speed of the autonomous gardening apparatus. The control unit detects working parameters of the battery pack, including temperature, and controls the connection/disconnection between the battery pack and other battery packs according to working parameters of the battery pack, thereby avoiding problems such as shortened lifespan and safety hazards due to mutual charging of (two or more) battery packs under extreme conditions.

In the design of the control unit, computer program instructions used by the control unit to perform operations of the present disclosure may be assembly instructions, instruction set architecture (ISA) instructions, machine instructions, machine-related instructions, microcode, firmware instructions, status setting data, or source code or object code written in any combination of one or more programming languages. The programming languages including object-oriented programming languages such as Smalltalk and C++, and conventional procedural programming languages such as "C" language or similar programming languages. Computer-readable program instructions may be executed entirely on a computer of a user, partly on the computer of the user, as a stand-alone software package, partly on the computer of the user and partly on a remote computer, or entirely on the remote computer or a server. For the case involving a remote computer, the remote computer may be connected to a computer of a user through any type of network including a local area network (LAN) or a wide area network (WAN), or may be connected to an external computer (for example, through the Internet by using an Internet service provider). In some embodiments, an electronic circuit, such as a programmable logic circuit, a field programmable gate array (FPGA), or a programmable logic array (PLA), is customized by using status information of the computer-readable program instructions. The electronic circuit may execute the computer-readable program instructions to implement various aspects of the present disclosure.

In the design of the battery pack, a maximum voltage of the battery pack may be 12 V, 16 V, 20 V, 24 V, 40 V or 60 V. A specific voltage depends on an application scenario of the autonomous gardening apparatus. This is not limited herein. A battery chip inside the battery pack may be a lithium-based battery, a fuel cell or the like.

In the design of the sensor, the sensor is electrically connected to the control unit, the sensor detects location information of the autonomous gardening apparatus and feeds back detected information to the control unit, and the control unit adjusts actions such as autonomous obstacle avoidance and path planning of the autonomous gardening apparatus based on the detected information.

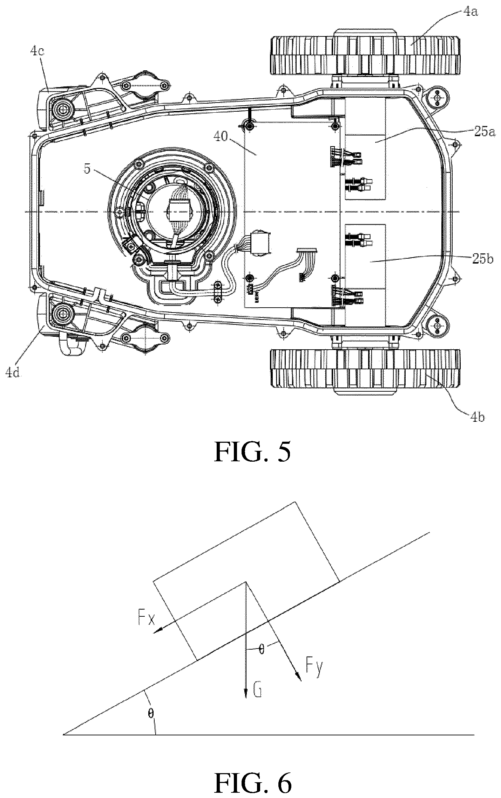

The disclosure further provides a second embodiment of the autonomous gardening apparatus. Specifically, as shown in FIG. 4 and FIG. 5, the autonomous gardening apparatus includes a housing 2, a drive motor (5, 25 (including 25a and 25b)), a moving assembly 4, a control unit 40, and an energy storage unit. The drive motor (5, 25) is disposed in the housing 2 and includes a stator and a rotor. The stator includes a stator core and a winding wound around the stator core. In this embodiment, the drive motor includes a left walking motor 25b for driving a left driving wheel, a right walking motor 25a for driving a right driving wheel, and a working motor 5 for driving a cutting blade as shown in the figure. In another embodiment, the drive motor may include merely one walking motor that simultaneously drives the left and right driving wheels or include a working motor that drives working parts such as a cutting blade and a cleaning device. The moving assembly 4 includes a left driving wheel 4b, a right driving wheel 4a, and caster wheels 4c and 4d. The moving assembly 4 is driven by the drive motor 25, to drive the autonomous gardening apparatus to walk. The control unit 40 controls the operations of the drive motor (5, 25), including at least controlling the rotor of the drive motor (5, 25) to operate at a target rotation speed. The energy storage unit provides electric energy to the drive motor (5, 25) and/or the control unit 40. When an actual rotation speed of the rotor is greater than the target rotation speed, the rotor rotates and cuts the winding to generate induced electric energy, and the induced electric energy is transferred to the energy storage unit.

Based on the target rotation speed, the control unit 40 regularly transmits the electric energy of the energy storage unit to the winding of the drive motor (5, 25) according to a preset procedure, thereby driving the rotor to rotate at the target rotation speed. Based on this control process, under normal circumstances, the actual speed of the rotor is substantially the same as the target rotation speed. However, under exceptional circumstances, the actual speed of the rotor may be greater than the target rotation speed. Several exceptional circumstances are described below.

The first circumstance is shown in FIG. 6. The autonomous gardening apparatus descends a ramp. The target rotation speed of the drive motor is set to V1, the corresponding moving speed of the automatic walking device is set to VI', an inclination angle of the ramp and the horizontal plane is θ, the mass of the autonomous gardening apparatus is M, the gravity is G, a moving direction of the autonomous gardening apparatus is X, and the direction perpendicular to X is Y. Based on this, the component of the gravity G in the X direction is Fx = G ^{∗} sin(θ), and the component of gravity G in the Y direction is Fy = G ^{∗} cos(θ), that is, an external force applied to the moving assembly in the moving direction is Fx = G ^{∗} sin(θ). According to the principles of physics, when θ gradually increases, Fx gradually increases. To maintain the target rotation speed V1 of the drive motor, the control unit needs to reduce the duty cycle, so that the electric energy obtained by the drive motor from the energy storage unit gradually decreases. When θ reaches the preset value θ1, a case in which Fx reaches the preset external force F1 = M ^{∗} V1' occurs. At this time, the control unit reduces the duty cycle to zero, and only by the action of F1, the drive motor can be maintained to operate at the target rotation speed V1, and the automatic walking device can move at V1'. When θ further increases to θ > θ1, Fx > F1, that is, the external force applied to the moving assembly in the moving direction is greater than the preset external force. Under the external force Fx, the actual moving speed of the automatic walking device further increases to V2', where V2' > V1'. At this time, the driving wheel drives the rotor to rotate at a speed greater than the target rotation speed V1, the rotor rotates and cuts the winding to generate induced electric energy, and the induced electric energy is transferred to the energy storage unit.

The second circumstance is that the autonomous gardening apparatus receives an artificial thrust Fx on a level ground, and the thrust Fx is greater than F1. Because F = M ^{∗} V, at this time, the actual moving speed of the automatic walking device is V' > +V1'. Correspondingly, the driving wheel drives the rotor to rotate at a speed greater than the target rotation speed V1, the rotor rotates and cuts the winding to generate induced electric energy, and the induced electric energy is transferred to the energy storage unit.

The foregoing two circumstances are: the external force applied to the moving assembly in the moving direction is greater than the preset external force, and at this time, the moving assembly drives the rotor to rotate at a speed greater than the target rotation speed.

The third circumstance is that when the autonomous gardening apparatus needs to stop walking or stop working, the control unit controls the drive motor to brake, so that the target speed of the drive motor is zero, to stop the driving wheel or the cutting blade. Under an inertial force, the driving wheel or the cutting blade continues to rotate and drives the rotor to continue rotating, so that the actual rotation speed of the rotor is greater than the target rotation speed 0, the rotor rotates and cuts the winding to generate induced electric energy, and the induced electric energy is transferred to the energy storage unit.

In this embodiment, optionally, the autonomous gardening apparatus further includes a sensor component. The sensor component is electrically connected to the control unit. The sensor component detects environmental information of the autonomous gardening apparatus and feeds back detected information to the control unit. The control unit controls the operations of the drive motor based on the detected information of the sensor component, to implement the actions of the autonomous gardening apparatus such as steering, moving forward, reversing, stopping walking, and stopping working.

Optionally, the control unit in this embodiment is the same as the control unit shown in FIG. 2 or FIG. 3. Details are not described herein again.

In the foregoing embodiment, the autonomous gardening apparatus may be a lawnmower, a sweeping machine or the like with a self-driving function. In some embodiments, the lawnmower and the sweeping machine further have functions of obstacle avoidance and autonomous path planning, use modules such as a (D) GPS and an electric compass to implement positioning and navigation, and may be applied to occasions with and without boundaries.

That is, the foregoing features may be arranged or combined in any manner and used for improving the autonomous gardening apparatus.

The foregoing described implementations are merely several implementations of this application. Word descriptions have limitations while infinite possible structures exist objectively. A person of ordinary skill in the art may make several improvements or modifications without departing from the principle of this application, and the improvements or modifications shall fall within the protection scope of this application. Therefore, the protection scope of this application shall be subject to the appended claims.

## Claims

1. An autonomous gardening apparatus, comprising:
a housing,
a drive motor, disposed in the housing and comprising a stator and a rotor, the stator comprising a stator core and a winding wound around the stator core;
a moving assembly, driven by the rotor of the drive motor, to drive the autonomous gardening apparatus to walk;
a control unit, controlling operations of the drive motor, at least comprising controlling the rotor to operate at a target rotation speed; and
an energy storage unit, supplying electric energy to the drive motor and/or the control unit,
wherein when an actual rotation speed of the rotor is greater than the target rotation speed, the rotor rotates and cuts the winding to generate induced electric energy, and the induced electric energy is transferred to the energy storage unit.

2. The autonomous gardening apparatus according to claim 1, wherein when driven by an external force in a moving direction, the moving assembly drives the rotor to rotate, and when the external force applied to the moving assembly in the moving direction is greater than a preset external force, the moving assembly drives the rotor to rotate at a speed greater than the target rotation speed.

3. The autonomous gardening apparatus according to claim 2, wherein when the autonomous gardening apparatus moves down along a slope with an angle greater than a preset angle, the external force applied to the moving assembly in the moving direction is greater than the preset external force.

4. The autonomous gardening apparatus according to claim 2, wherein the moving assembly comprises a wheel set and/or a moving member in contact with the ground to support and move the autonomous gardening apparatus.

5. The autonomous gardening apparatus according to claim 4, wherein the rotor is located on an inner side of the stator, and the rotor assembly is connected to the wheel set and/or the moving member.

6. The autonomous gardening apparatus according to claim 1, wherein when the control unit controls the drive motor to brake, the rotor continues to rotate under an inertial force, so that the actual rotation speed of the rotor is greater than the target rotation speed.

7. The autonomous gardening apparatus according to any one of claims 1 to 6, wherein the control unit comprises a switch circuit, the switch circuit comprises a first switch module and a second switch module connected in series, the switch circuit converts the electric energy supplied by the energy storage unit to drive the drive motor, each of the first switch module and the second switch module comprises a parasitic diode, and when a voltage of the induced electric energy generated by the drive motor is greater than a voltage of the energy storage unit, the parasitic diode is conducting, and the electric energy generated by the drive motor is transferred to the energy storage unit through the parasitic diode.

8. The autonomous gardening apparatus according to claim 7, wherein the switch circuit comprises a drive module configured to drive the first switch module and the second switch module.

9. The autonomous gardening apparatus according to claim 8, wherein the drive module further comprises a bootstrap circuit, and an output terminal of the bootstrap circuit is electrically connected to a trigger terminal of the first switch module and a trigger terminal of the second switch module, to drive the first switch module and the second switch module.

10. The autonomous gardening apparatus according to claim 1, wherein the energy storage unit is electrically connected to a voltage regulator.

11. The autonomous gardening apparatus according to claim 10, wherein the voltage regulator comprises a capacitor, one end of the capacitor is electrically connected to a positive terminal of the energy storage unit, the other end is electrically grounded, and the voltage regulator performs voltage regulation and filtering when the electric energy generated by the drive motor is transferred to the energy storage unit.

12. The autonomous gardening apparatus according to claim 1, further comprising a sensor component, wherein the sensor component is electrically connected to the control unit, the sensor component detects environmental information of the autonomous gardening apparatus and feeds back detected information to the control unit, and the control unit controls the operations of the drive motor based on the detected information.
